# EUROPEAN PATENT APPLICATION

(11) **EP 3 165 828 A1**
(43) Date of publication of application: **10.05.2017**
(21) Application number: 16197157.7
(22) Date of filing: 03.11.2016
(51) Int. Cl.: F24C 3/08, F23D 14/06

(54) **COOKING HOB GAS BURNER**

(30) Priority: 04.11.2015 GB 201519490
(71) Applicant: Aga Rangemaster Limited, Leamington Spa Warwickshire CV31 3RG (GB)
(72) Inventor: GILMOUR, Peter, Birmingham, West Midlands B36 9SZ (GB); REYNOLDS, David, Studley, Warwickshire B80 7BF (GB)
(74) Representative: Tranter, Andrew David

(57) **Abstract**

A cooking hob gas burner comprises a burner head for positioning on a cooking hob including an upstanding sidewall surrounding a cavity therein for the receipt of combustible gas; and a burner cap above the upstanding sidewall for providing protection thereto; the upstanding sidewall having at least one burner port extending from the cavity through the upstanding sidewall. The or each burner port is angled such that, in use, gas exiting the or each burner port from the cavity has a positive upward component of velocity. The arrangement provides an improved efficiency of burn for the cooking hob.

## Description

The present invention relates to gas cookers, particularly to cooking hob gas burners for use with gas cookers, and to gas cookers including such a cooking hob gas burner.

Cooking hob gas burners are generally provided on the hobs of domestic and industrial gas cookers in order to facilitate the ignition of combustible gas and thus produce heat for cooking. Such gas burners often include a burner head which may receive a gas supply from the associated gas cooker and channel this supply to a number of burner ports through the burner head. Gas travelling though these burner ports may then be ignited, producing a flame.

Such cooking hob gas burners are required to be resilient to impact due to their position on the cooking hob. For instance, it is not uncommon for cooking pans and utensils to be brought into contact with the gas burners and also for solid or liquid residue to land on its surface. As such, cooker hob gas burners are required to be relatively large and bulky devices having resistance to such events, in contrast to other forms of gas burner which may be formed from pressed metal or the like. These smaller and more lightweight gas burners are not suitable for use on cooker hobs.

Cooking hob gas burners are commonly provided on gas cookers or ranges, including ovens, grills, and other cooking appliances. In general, the gas burner may comprise two major parts: a burner head, and a burner cap. The burner head is generally annular and may include a cavity for the receipt of a flow of combustible gas from the cooker to which it is attached and a plurality of burner ports which channel the gas from the cavity to the exterior of the gas burner for ignition.

Known designs of gas burner include burner ports which are radially disposed through the annular burner head, providing even or substantially even delivery of gas therearound. These burner ports may include channels through the burner head, open at an upper extremity, the said channels, and in some cases also the cavity itself, then being sealed by the mounting of the burner cap. In this case, the burner cap acts as a lid for the burner ports, channelling the gas exiting from the burner head in an initially horizontal direction and in a controlled manner.

Once the gas has exited the burner head through the burner ports, the gas is ignited by way of a pilot light or other source of ignition, for instance a spark. A flame is produced, releasing the required heat for cooking. Hot air rises, therefore the flame, ejected horizontally from the burner head due to the radial alignment of the burner ports, naturally curls upwards around the burner cap due to buoyancy created by the hot gases, such that it may then contact a pan, griddle, or other receptacle.

It is an object of the present invention to provide an improved cooking hob gas burner having benefits over those presently known.

According to a first aspect of the invention, there is a provided a cooking hob gas burner comprising: a burner head for positioning on a cooking hob including an upstanding sidewall surrounding a cavity therein for the receipt of combustible gas; and a burner cap above the upstanding sidewall for providing protection thereto; the upstanding sidewall having at least one burner port extending from the cavity through the upstanding sidewall; characterised by the or each burner port being angled such that, in use, gas exiting the or each burner port from the cavity has a positive upward component of velocity.

A gas burner in accordance with the first aspect of the invention includes each of the features required for the gas burner to function properly, including resistance to damage and spills and sufficient mass to resist dislodgement from its position on the cooker hob. Furthermore, the angling of the burner ports such that gas exiting the burner ports is directed upwards enables the flames emitted from the gas burner to propagate towards an object to be heated in a more efficient manner. It also may prevent or limit the effect of adverse air currents on the flames, additionally improving efficiency.

In a preferred arrangement, the burner head may include an upper wall, forming an upper boundary of the cavity, on which the burner cap is securable.

Preferably, the upstanding sidewall may be annular. Alternatively or additionally, the upstanding sidewall may include a cutaway at or above the or each burner port. Having an annular sidewall ensures that the spread of the flame is even about the burner head. Furthermore, providing a cutaway at or above the or each burner port ensures that flame propagation is less likely to be inhibited.

Preferably, the cutaway may be provided by the upstanding sidewall including a frusto-conical or substantially frusto-conical outer surface tapering in a direction towards the burner cap. By providing an outer surface which is inclined or sloped in this manner, the outer surface may be limited from interfering with flame propagation, further increasing efficiency of the burner. Further preferably, the frusto-conical outer surface may be tangential or substantially tangential to the or each burner port.

In a preferred embodiment, in use, gas flowing through the or each burner port may exit the or each burner port at a position vertically above that at which it enters said burner port. Thus the gas may accelerate in an upward direction whilst traversing the upstanding sidewall.

Preferably, the or each burner port may exit the upstanding sidewall at an angle to the horizontal of between 10 and 50 degrees, more preferably between 20 and 40 degrees, and most preferably at an angle of substantially 30 degrees.

Preferably, the or each burner port may follow a linear or substantially linear path through the upstanding sidewall. Thus, the distance through the upstanding sidewall may be minimised. Alternatively, the or each burner port may follow a curved or curvilinear path through the upstanding sidewall, which may improve gaseous flow therethrough.

To provide additional protection to the burner head, the burner cap may overhand at least a portion of, or may overhang entirely, the upstanding sidewall, thus providing increased protection thereto.

Beneficially, the burner head may further include a flange on a lower surface of the upstanding sidewall, the flange having at least one channel for the inlet or outlet of gases. The channel or channels may allow enhanced mixing of gases within the burner head, further increasing efficiency. Preferably, the flange may be annular.

According to a second aspect of the invention there is provided a cooker comprising at least one cooking hob gas burner as claimed in any one of the preceding claims.

There will now be described, by way of example only, one embodiment of a gas burner according to the present invention with reference to the accompanying drawings of which:
Figure 1 is a perspective view of an embodiment of a gas burner in accordance with the first aspect of the invention;
Figure 2 is an inverted perspective view of the gas burner of Figure 1; and
Figure 3 is an exploded view of the gas burner of Figure 1, with the bolt omitted, for clarity.

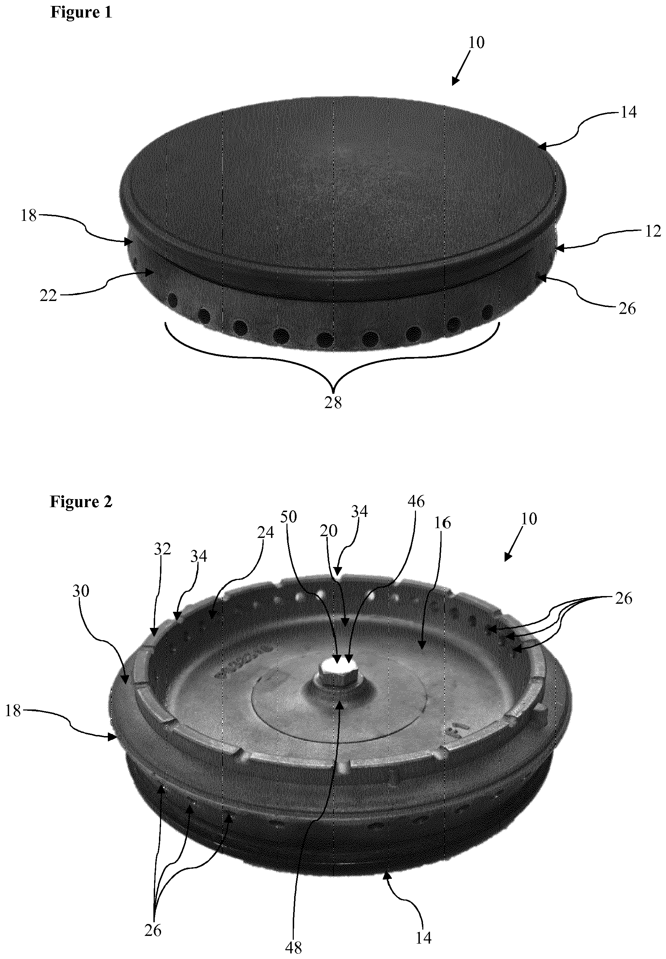

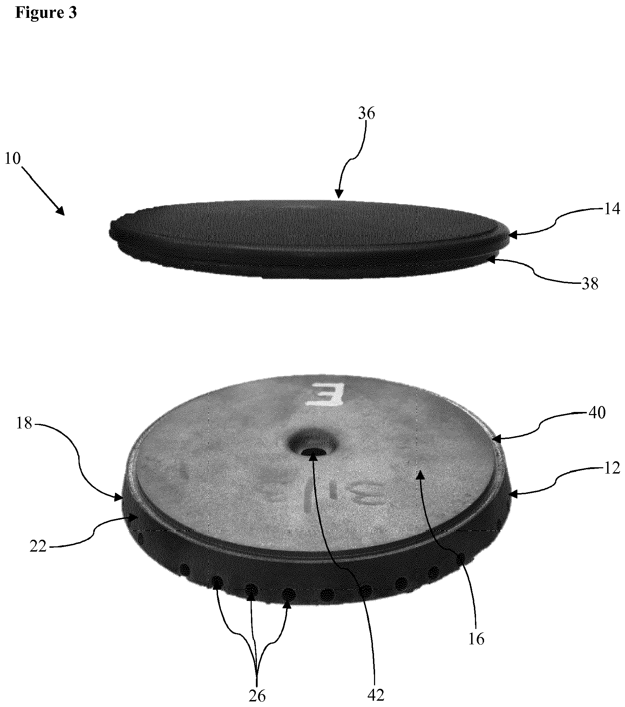

One embodiment of a cooking hob gas burner, hereinafter referred to as a gas burner 10, is shown in Figures 1 to 3. The depicted gas burner 10 comprises a flame spreader or burner head 12 and a burner cap 14. The burner head 12 shown includes an upper wall 16 which may be planar or domed, for example, and an upstanding sidewall, which in the present embodiment is an annular sidewall 18, surrounding a cavity 20 within for the receipt of a gas flow.

Though described herein as an annular sidewall 18, the upstanding sidewall need not necessarily be annular and could instead be any shape. For example, different and/or preferred flame propagation patterns may be enabled through providing the upstanding sidewall in a different shape. An ovoid upstanding sidewall may be used to provide more even heating for elongated pans, for instance, or an undulating, jagged, or otherwise shaped upstanding sidewall may be used where desired. The burner head need not necessarily have an upper wall, and thus the cavity may instead be bounded by the burner cap.

The burner head 12 must be relatively massive due to its exposure when in position on a gas hob. For instance, it is likely to endure impacts from pots, pans, and the like, and must therefore be resistant to impact damage or deformity. The burner cap 14 protects the burner head 12 from spills and must be easily cleanable and resistant to corrosion. Thus, it is required that the gas burner 10 be constructed from two parts and that a light, thin, or flimsy construction must be avoided.

The burner head 12 may be formed of cast brass or iron, preferably with a thickness of 5 to 10mm, such that it may sit substantially unsecured on a cooker hob and be held in place by its own weight. Beneficially, a brass burner head 12 may be relatively easily machined so as to provide the required features of the gas burner 10. Additionally, the gas burner 10 formed in this manner may provide a substantial thermal mass which may pre-heat the gas flow, improving combustion. Whilst the present embodiment may be manufactured by casting, it may also be possible to machine or otherwise manufacture the burner head 12, depending on manufacturing capabilities or design preferences.

The annular sidewall 18 defines a radial extent of the cavity 20 and in the present embodiment includes a cutaway which takes the form of a frusto-conical outer surface 22, tapering in a direction towards the burner cap 14. The annular sidewall 18 further includes a cylindrical inner surface 24.

The cutaway is present to limit the inhibition of flame propagation by the presence of any material in or near to the flame path. Thus, it may be beneficial to cutaway material at or in the vicinity of the or each burner port, as shown, or otherwise to remove material above the or each burner port. As such, the cutaway may planar, as in the frusto-conical outer surface 22 of the present embodiment, or may instead be curved or stepped, for example.

A number of burner ports 26, in this embodiment thirty-six, extend from the cavity 20 through the annular sidewall 18 to exit the annular sidewall 18 in a direction above the horizontal. In use, gas will therefore be ejected from the cavity 20 through the burner ports 26 such that it has an upward component of velocity. As such, the gas will be forced towards an object to be heated (not shown). Advantageously, the depth of the annular sidewall 18, which may be, for example, 5 to 10 mm, directs the gas ejected from the burner ports 26 in a more controlled and predictable manner, further enhancing the properties of the gas burner 10.

The burner ports 26 may be machined once the burner head has initially been cast. Thus they may be precisely manufactured to an optimum diameter for gas flow, and may also be constructed at the desired angle. The angle of at least the portion of the or each burner port 26 adjacent the outer surface 22 of the annular sidewall 18 ensures that propagation of gas exiting the annular sidewall 18 has a vertical component, removing the reliance on flame buoyancy to solely control the direction of the flame. In this manner, the resulting flames may more quickly come into contact with the pan or other form of cookware, and heat may therefore be transmitted more quickly and efficiently.

In this embodiment, the outer surface 22 of the annular sidewall 18 also assists in directing the gas flow more efficiently towards an object situated above the gas burner 10 due to the slope of the frusto-conical outer surface 22 preventing or limiting any inhibition of flame propagation. Any possibility of inhibition by the outer surface 22 of the burner head 12 is further limited by providing the outer surface 22, as shown, at an angle tangential to the angle of the burner ports 26. However, other angles of outer surface may be utilised, in accordance with any other design or manufacturing limitations.

As briefly discussed previously, the burner cap 14 provides protection to the burner head 12, in particular from directly above the gas burner 10. As such, the burner cap 14 may be large enough to provide effective protection to at least a portion of the annular sidewall 18, for instance by overhanging the annular sidewall 18. It may further be beneficial for such an overhang or other like feature to provide protection to the entirety of the sidewall 18, thus preventing or limiting the ingress of solid or liquid matter into the burner ports 26 or onto the burner head 12. Such contamination could negatively affect the operation of the gas burner 10.

Burner ports 26 in the present embodiment are spaced in a repeating pattern about the annular sidewall. This ensures a substantially even spread of flame around the burner head 12, and thus predictable heating to an object to be heated. In the depicted embodiment, the thirty-six burner ports 26 are arranged in four burner port groups 28, each having nine burner ports 26. The burner ports 26 in each burner port group 28 are equally spaced from one another, whilst a larger gap, approximately twice the gap between burner ports 26 within a burner port group 28, is provided between adjacent burner port groups 28.

Although shown in the specific arrangement described above, the burner ports may be provided in a greater or lesser number of burner port groups. Alternatively, the burner ports may be provided in an ungrouped state. Whilst it may be beneficial to have the burner ports equally spaced from one another alternative arrangements are possible and any such options will be apparent to one skilled in the art.

Each of the burner ports 26 provided in the present embodiment are aligned with one another in a single ring about the annular sidewall 18. Whilst this is beneficial in that the flames from gas combustion will each propagate from a similar height on the annular sidewall 18, it may be preferred to include burner ports in a second, third, or further ring about the annular sidewall. It may be desired to have each ring of burner ports at the same angle or different angles to one another, or to include burner ports in the same ring with different angles through the annular sidewall. Each variable will result in differing of the heating pattern of the gas burner, and thus may be preferable in specific situations.

By directing the gas flow from the gas burner 10 more directly upwards, a greater proportion of the heat from the combustion of gas upon exit of the burner head 12 may be directed towards the object to be heated. In comparison, known burner heads direct the gas horizontally, with the flame subsequently curling upwards due to buoyancy which causes the hotter gases of the flame to rise in relation to the cooler gases in their surroundings. Consequently, air currents may adversely affect the direction of the flame, which is a common issue in a domestic or industrial kitchen environment. By biasing the burner ports 26 and thus the initial flame propagation in an upward direction, the flame is forced or encouraged into contact with the object to be heated and, accordingly, may be less affected by air currents. Energy may therefore be transmitted more efficiently from the gas burner 10 of the present invention.

Through altering the angle of exit of the burner ports 26 through the annular sidewall, the characteristics of the gas burner 10 may also be altered. For example, by increasing the angle of the burner ports from the horizontal, more direct heating may be provided from the gas burner at a smaller radius. However, it is likely that the object to be heated may be required to be moved further away from the gas burner itself, in order to provide maximum efficiency of heating, resulting in a less compact gas burner. Conversely, by lowering the angle, the burner may be made more compact, but with less direct, and therefore more inefficient, heating.

Preferably, the angle of exit of the burner ports 26 may be between 10 and 50 degrees from horizontal. More preferably, the angle of exit may be between 20 and 40 degrees from the horizontal, and most preferably, the angle of exit may be 30 degrees from the horizontal.

The burner ports 26 in the depicted embodiment follow a linear or substantially linear path through the annular sidewall 18. This need not necessarily be the case and it is possible to provide the burner ports such that they follow a curved or curvilinear path through the annular sidewall. Thus, for instance, the burner ports may be substantially horizontal at a position adjacent to the cavity and yet gas may be forced to exit the sidewall in a more upward direction. Such an alteration may improve gas flow through the burner ports.

Whilst in the present embodiment the annular sidewall 18 includes a frusto-conical outer surface 22, this may not be an essential feature and a more conventional vertical outer surface may be used in its place. For instance, having a vertical outer surface may allow the manufacture of the burner head to be more cost-effective or require simpler tooling, the benefit of which may outweigh those benefits of the frusto-conical sidewall. Other designs or orientations of outer surface, including features such as undulations, recesses, or the like, may also be utilised, in place of a smooth circular or ovoid surface. Similarly, the inner surface of the annular sidewall may be cylindrical, as shown, or may otherwise be sloped. For instance, it may be desirable for the inner surface to be parallel or substantially parallel to the outer surface.

On a lower surface 30 of the annular sidewall 18 is, in this embodiment, a preferably annular flange 32, projecting in parallel with the annular sidewall 18. The flange 32, although annular in the present embodiment, may have a different shape. For instance, it may be preferred for the flange to follow the path of the upstanding sidewall for technical or design reasons, which will be known to those skilled in the art.

The annular flange 32 is in the present embodiment formed as one piece with the annular sidewall 18, but may instead be formed separately or in multiple parts. Around the circumference of the annular flange 32, a plurality of channels, which in this case are recessed channels 34, are provided to allow gases to flow into and/or out of the cavity 20 within the burner head 12.

In the present embodiment, sixteen recessed channels 34 are placed equidistantly around the circumference of the annular flange 32, such that an even gas flow may be enabled. In other embodiments, it may be possible to provide a greater or lesser number of recessed channels, evenly or unevenly spaced around the annular flange. Furthermore, it may be preferred to provide other types of channel, such as apertures or otherwise, in place of or in addition to the recessed channels of the present embodiment.

The burner cap 14 comprises a planar or, as shown in the present embodiment of the gas burner 10, domed main body 36 and a perimeter ridge 38, protruding in a downward direction from the main body 36 and receivable in a complementarily-shaped ridge-receiving recess 40 in the burner head 12. The main body 36 of the burner cap 14 may be coated in, or formed of, a ceramic or enamelled material in order that it have increased resistance to corrosion and/or is easily cleanable. Thus the burner cap 14 may provide protection to the remainder of the gas burner 10 when in place. The perimeter ridge 38 allows the burner cap 14 to be easily locatable in the burner head 12 ready for mounting and may also assist in providing a partial or total seal between the burner head 12 and the burner cap 14.

A mounting aperture 42 is provided through the upper wall 16 of the burner head 12 for the fixation of the burner cap 14. A single mounting aperture 42 is herewith provided centrally through the burner head 12, but a greater number may also be provided, and in any position. Alternatively, if the burner cap need not be fixated, there may be no necessity to provide a mounting aperture.

In the present embodiment, a radiused lip 44 is provided around the mounting aperture. The lip 44 provides a surface on which fixation means 46 may abut when positioned within the mounting aperture 42. Additionally, the radiused lip 44 presents a smooth contoured surface 48 to gas being injected from beneath. Commonly, a gas injector (not shown) may be positioned directly beneath the centre of the burner cap 14, to ensure even propagation of gas throughout the cavity 20. By providing the radiused lip 44, gas entering the cavity 20 will be encouraged to change direction in a controlled manner, and mixing of the gas with air may be more even, resulting in a more homogeneous mixture.

Though described herewith as being a radiused lip 44, the lip may instead by chamfered, sloped, or otherwise contoured to provide a smooth or assisted change in direction of the gas flow. However, it is also possible to omit the lip or any associated shaping, in order to save cost.

A screw, bolt, clip, or other fixation means 46 may be provided through the mounting aperture 42 to affix the burner cap 14. In the present embodiment, a bolt 50 is positionable through the mounting aperture 42, abutting the radiused lip 44, and receivable within a threaded hole (not shown) in the burner cap 14. The threaded hole is located on an underside of the burner cap 14, allowing the bolt 50 to be inserted from below the burner cap 14. Thus, in use, the bolt 50, threaded hole, and mounting aperture 42 may be hidden from view. When tightened, the burner cap 14 will be encouraged into an airtight or substantially airtight arrangement with the burner head 12, with the bolt 50 tightly pressing against the radiused lip 44, further limiting air or gas release from between the burner head 12 and the burner cap 14.

Whilst in the present embodiment the upper boundary of the cavity 20 is provided by an upper wall 16 formed as part of the burner head 12, this is not a requirement and the upper wall may instead be formed by, for example, the burner cap. Alternatively, a further element may be utilised for this purpose. The upper wall may also be formed by a combination of the burner head, burner cap, and/or an additional element, as long as the upper wall is sufficient to prevent or limit the escape of combustible gas therethrough.

It is therefore possible to provide an improved gas burner for a gas hob. The gas burner includes a burner head having an upstanding sidewall through which are provided a plurality of burner ports which are directed such that gas exiting the burner ports has a positive upward component of velocity. The direction of the burner ports provides enhanced heating and efficiency from the gas burner.

## Claims

1. A cooking hob gas burner comprising:
a burner head for positioning on a cooking hob including an upstanding sidewall surrounding a cavity therein for the receipt of combustible gas; and
a burner cap above the upstanding sidewall for providing protection thereto;
the upstanding sidewall having at least one burner port extending from the cavity through the upstanding sidewall;
**characterised by** the or each burner port being angled such that, in use, gas exiting the or each burner port from the cavity has a positive upward component of velocity.

2. A cooking hob gas burner as claimed in claim 1, wherein the burner head includes an upper wall, forming an upper boundary of the cavity, on which the burner cap is releasably securable.

3. A cooking hob gas burner as claimed in claim 1 or claim 2, wherein the upstanding sidewall is annular.

4. A cooking hob gas burner as claimed in any one of claims 1 to 3, wherein the upstanding sidewall includes a cutaway at or above the or each burner port.

5. A cooking hob gas burner as claimed in claim 4, wherein the cutaway is provided by the upstanding sidewall including a frusto-conical or substantially frusto-conical outer surface tapering in a direction towards the burner cap.

6. A cooking hob gas burner as claimed in claim 5, wherein the frusto-conical outer surface is tangential or substantially tangential to the or each burner port.

7. A cooking hob gas burner as claimed in any one of the preceding claims wherein, in use, gas flowing through the or each burner port exits the or each burner port at a position vertically above that at which it enters said burner port.

8. A cooking hob gas burner as claimed in any one of the preceding claims wherein, in use, gas ejected from the or each burner port exits the upstanding sidewall at an angle to the horizontal of between 10 and 50 degrees, between 20 and 40 degrees, or substantially 30 degrees.

9. A cooking hob gas burner as claimed in any one of the preceding claims, wherein the or each burner port follows a linear or substantially linear path through the upstanding sidewall.

10. A cooking hob gas burner as claimed in any one of claims 1 to 9, wherein the or each burner port follows a curved or curvilinear path through the upstanding sidewall.

11. A cooking hob gas burner as claimed in any one of the preceding claims, wherein the burner cap overhangs at least a portion of the upstanding sidewall for providing protection thereto.

12. A cooking hob gas burner as claimed in claim 11, wherein the burner cap completely overhangs the upstanding sidewall.

13. A cooking hob gas burner as claimed in any one of the preceding claims, wherein the burner head further includes a flange on a lower surface of the upstanding sidewall, the flange having at least one channel for the inlet or outlet of gases.

14. A cooking hob gas burner as claimed in claim 13, wherein the flange is annular.

15. A cooker comprising at least one cooking hob gas burner as claimed in any one of the preceding claims.
